# EUROPÄISCHE PATENTANMELDUNG

(11) **EP 1 439 053 A1**
(43) Veröffentlichungstag der Anmeldung: **21.07.2004**
(21) Anmeldenummer: 04450002.3
(22) Anmeldetag: 12.01.2004
(51) Int. Cl.: B29C 73/16, B29C 73/02

(54) **Gerät für provisorische KFZ-Reifen-Reparaturen**

(30) Priorität: 13.01.2003 AT 352003
(71) Anmelder: Ventrex Automotive GmbH, 8011 Graz (AT)
(72) Erfinder: Patsch, Andreas, 8071 Dörfla (AT)
(74) Vertreter: Wildhack, Helmut, Dr. Dipl.-Ing.

(57) **Zusammenfassung**

Die Erfindung betrifft ein Gerät für die provisorische Reparatur eines leck gewordenen Reifens eines Kraftfahrzeuges
- mit in einem Gehäuse (2) angeordnetem, mittels eines mit Batterie-Strom versorgbaren, bevorzugt an den Zigarettenanzünder des Fahrzeuges anschließbaren, Motors antreibbarem Kompressor für die Erzeugung von Druckluft,
- weiters mit einem, in einem mittels aufklappbaren Verschlussdeckels (210) verschließbaren Leerraum (20) des Gehäuses (2) unterbringbaren, an den Anschlusskopf (4) eines Reifen-Dichtmittel-Behältnisses (5) anschließbaren Druckluft-Versorgungsschlauch (245) für die Förderung eines Druckluft-Reparaturmittel-Gemisches aus dem Dichtmittel-Behältnis (5) durch einen zweiten, ebenfalls an den genannten Anschlusskopf (4) anschließbaren Schlauch (245') und durch das Ventil des Reifens in dessen Inneres
- und mit einer Aufnahme (3) für den Anschlusskopf (4) des Dichtmittel-Behältnisses (5) an der Innenseite eines aufklappbaren Gehäusdeckels (210),
- welche Aufnahme (3)
als Halterung (30) für ein nut/feder-gleitgeführtes Einschieben des Anschlusskopfes (4) des Dichtmittel-Behältnisses (5) ausgebildet ist.

## Beschreibung

Die vorliegende Erfindung betrifft ein neues Gerät für die provisorische Reparatur eines schadhaften, undicht bzw. leck gewordenen Reifens eines Kraftfahrzeuges
- mit in einem Gehäuse angeordnetem, mittels eines von der Fahrzeug-Batterie mit Strom versorgbaren, bevorzugt an den Zigarettenanzünder des Fahrzeuges anschließbaren, Motors antreibbarem Kompressor für die Erzeugung von Druckluft,
- weiters mit einem, gegebenenfalls zusammen mit dem Stromversorgungskabel für den Motor, in einem mit einem aufklappbaren Verschlussdeckel verschließbaren Leerraum des Gehäuses unterbringbaren, an den Anschlusskopf eines mit einem Reifen-Dichtmittel gefüllten Behältnisses, insbesondere einer derartigen Flasche, anschließbaren Druckluft-Versorgungsschlauch für die Förderung eines Druckluft-Reparaturmittel-Gemisches aus dem Dichtmittel-Behältnis durch einen zweiten, ebenfalls an den genannten Anschlusskopf anschließbaren Schlauch und durch das Ventil des Reifens in dessen Inneres
- und mit einer Aufnahme für den Anschlusskopf des Dichtmittel-Behältnisses an der Innenseite eines im Nahbereich der Bodenwandung des Gehäuses angelenkten, im geschlossenen Zustand im Wesentlichen eine bzw. einen Teilbereich einer der Seitenwandungen des Gehäuses bildenden, aufklappbaren und im geöffneten Zustand vom Gehäuse aus nach abwärts aufgeklappten Verschlussdeckels,
- wobei die Aufnahme bei geschlossenem Gehäuse - von außen nicht sichtbar - sich in dessen Innerem befindet.

Reifen-Reparaturgeräte mit im jeweiligen Kraftfahrzeug mitführbarer Kompressor-Einheit und einem jederzeit zukaufbaren Behältnis mit dem mittels der im Kompressor erzeugten Druckluft in den defekten Reifen einförderbaren, im Reifen-Inneren sich dann verteilenden und ein Leck im Reifen verschließenden Dicht- bzw. Reifen-Füll-Masse sind in verschiedenen Formen auf dem Markt erhältlich und haben sich durchaus bewährt.

Aus der JP 2001-212883 A ist ein im Wesentlichen wie eingangs beschriebenes Reifenreparatur-Gerät bekannt, wobei dort in der am dort seitlichen Verschlussdeckel angeordneten Aufnahme für das Reifen-Dichtmittel-Behältnis bzw. für den Hals der dafür vorgesehenen Flasche die Organe für die Zuführung von Pressluft und die Abführung für das Pressluft-Dichtmittel-Gemisch angeordnet sind. Der Hals der Dichtmittelflasche weist für den dichten Anschluss an die genannte Aufnahme ein Außengewinde auf, welches mit einem entsprechenden Innengewinde in der Aufnahme schraub-kooperiert. Die Gewindeverbindung hat den Nachteil, dass sie relativ viel Manipulationszeit bei der Anordnung der Dichtmittelflasche in der Aufnahme erfordert. Darüber hinaus besteht durch die Anordnung der Zu- und Abführungen in der Aufnahme die Gefahr, dass dort störende Dichtmittelreste zurückbleiben.

Die Erfindung geht von einem anderen System von handelsüblichen Dichtmittel-Behältnissen aus, bei welchen die Pressluft-Zu- und die Dichtmittel/Luftgemisch-Abführung sowie Ventile u.dgl. in dessen eine charakteristische Form aufweisendem Anschlusskopf des Dichtmittel-Behältnisses selbst untergebracht sind.

Das Gehäuse der auf den Einsatz der hier in Rede stehenden Dichtmittel-Flaschen ausgerichteten, handelsüblichen transportablen Geräte ist meist nach Art einer flachen Schachtel mit z. B. an der Oberseite angeordneten Schlitzen für die vom Kompressor anzusaugende Luft ausgebildet. Im Gehäuse selbst befindet sich außer dem Kompressor mit seinem Antrieb ein Leerraum für die Unterbringung des für die Führung der im Kompressor erzeugten Druckluft zum Anschlusskopf des Dichtmittel-Behältnisses vorgesehenen Schlauches, welcher Leerraum eventuell auch für die Aufnahme des Stromzuführungskabels für den Kompressor-Antrieb dienen kann.

Bei einer durchaus bewährten Ausführungsform dieser Reifen-Reparaturgeräte ist in der oberen Wand, also in der Deck-Wandung, des Kompressor-Gehäuses eine etwa halbkreisförmige Ausnehmung vorgesehen, welche - wenn der dort im Wesentlichen die Vorderwand des Kompressor-Gehäuses bildende, im geschlossenen Zustand denselben und insbesondere den genannten Leerraum und dort sich befindliche Schalt- und KontrollElemente bzw. das Gehäuse nach vorne hin abschließende und bei Inbetriebnahme des Gerätes im Falle einer Reifen-Reparatur nach vorne herunterklappbare Verschlussdeckel geöffnet ist - nach vorne hin offen und für den Einschub des Anschlusskopfes des in Rede stehenden Dichtmittel-Behältnisses bereit ist.

Die Randzone dieser etwa halbkreisförmigen Ausnehmung in der Deck-Wandung des Kompressorgehäuses bildet eine Art bogenförmig verlaufende "Feder", auf welche dann der Anschlusskopf des Dichtmittel-Behältnisses mit seiner zwischen einer etwa herzförmigen Auflageplatte und einem davon beabstandeten Führungs-Wulst, angeordneten, mit dem Rand der genannten Ausnehmung des Gehäuses gleitführungskooperierbaren Einschiebe-Nut aufgeschoben wird, sodass der nach unten weisende Anschlusskopf des sozusagen auf den Kopf gestellten Dichtmittel-Behältnisses einigermaßen stabil in Position gehalten ist.

Ein wesentlicher Nachteil dieses bekannten Reifen-Reparatur-Gerätes besteht darin, dass die Ausnehmung des Gehäuses für die Aufnahme des Anschlusskopfes des Dichtmittel-Behältnisses auch nach dem Schließen von dessen Verschlussdeckel offen bleibt und somit die latente Gefahr unerwünschter Verschmutzung gegeben ist.

Ein weiterer Nachteil dieser üblichen Ausführungsform der Aufnahme für den Anschlusskopf des Dichtmittel-Behältnisses besteht in der relativ geringen mechanischen Stabilität der Einschub-Öffnung, welche eben nur durch einen Ausschnitt in der meist aus Kunststoff gefertigten und daher relativ biegsamen Deck-Wandung des Kompressor-Gehäuses gebildet ist.

Durch das Verbiegen der Deck-Wandung kann es zum Schiefstand des mit seinem Anschlusskopf in die beschriebene Aufnahme-Ausnehmung eingeschobenen und auf diese Weise relativ hebelkraft-wirksamen Dichtmittel-Behältnisses kommen, womit die Stabilität des gesamten Ensembles von Kompressor-Gehäuse und Dichtmittel-Behältnis während der Reifen-Reparatur gefährdet sein kann.

Weiters besteht unter Umständen die Gefahr eines Ausbrechens von Teilen der ja frei endenden Ränder bzw. Randzonen der Aufnahme-Ausnehmung am Gehäuse, da dort keinerlei konstruktive Maßnahme für eine mechanische Verstärkung dieses Randes getroffen ist.

Nicht zuletzt besteht ein wesentlicher Nachteil der bekannten Geräte darin, dass bei ihnen keine Möglichkeit besteht, das Dichtmittel-Behältnis in seiner Lage gegen Verrutschen od.dgl. zu sichern und insbesondere zu fixieren.

Die vorliegende Erfindung hat sich die Aufgabe gestellt, ein Gerät der beschriebenen Ausführungsart für provisorische Reifen-Reparaturen zu schaffen, bei welchem, wenn dessen Verschlussdeckel geschlossen ist, von den oben schon erwähnten Ansaugschlitzen in der Wandung des Gehäuses für die Zuführung der Kompressorluft abgesehen, eine volle Schließung des Kompressor-Gehäuses ermöglicht ist, bei welcher weiters eine gute mechanische Stabilisierung des mit seinem Anschlusskopf in die dafür vorgesehene Aufnahme eingeschobenen Dichtmittel-Behältnisses erreicht wird und auch die Manipulation beim Einhängen bzw. Einschieben des Dichtmittel-Behältnisses mit seinem eine etwa herzförmige flache Anschlussplatte aufweisenden Anschlusskopf durch eine freie, unbehinderte Zugänglichkeit der Aufnahme für den Anschlusskopf wesentlich erleichtert ist. Schließlich soll nach erfolgtem Einschub des Dichtmittel-Behältnisses mit seinem Anschlusskopf in die dafür vorgesehene Ausnehmung am Gehäuse auch eine stabile und wirksame Lage-Fixierung des Behältnisses während des Reparatur-Vorganges gewährleistet sein.

Gegenstand der Erfindung ist somit ein wie eingangs genanntes Gerät für eine provisorische Reifen-Reparatur, welches dadurch gekennzeichnet ist, dass die Aufnahme für den Anschlusskopf als Halterung für ein im Wesentlichen nut/feder-gleitgeführtes Einschieben des Anschlusskopfes des Dichtmittel-Behältnisses ausgebildet ist.

Durch die beim erfindungsgemäßen Reifen-Reparatur-Gerät der in Rede stehenden Art erfolgte Verlagerung der Aufnahme bzw. Halterung für das Dichtmittel-Behältnis von dessen bisheriger Positionierung in einer vom vorderen Rand der Kompressor-Gehäuse-Deckenwandung ausgehenden, dort hin völlig offenen Einschub-Ausnehmung auf den aufklappbaren Verschlussdeckel des Gehäuses bzw. auf dessen Innenseite hin fällt diese etwa halbrunde und offene Aufnahme-Öffnung für den Einschub des Anschlusskopfes des Dichtmittel-Behältnisses weg, das Gehäuse ist nach Schließen des Verschlussdeckels dann rundum verschlossen und sein Inneres ist auf diese Weise vor Verschmutzung u.dgl. sicher.

Eine besonders bevorzugte Ausführungsform der Erfindung gemäß **Anspruch 2** besteht darin, dass für die Aufnahme des Anschlusskopfes des Dichtmittel-Behältnisses eine Art Gleitschuh für einen lagegerechten Einschub dieses Anschlusskopfes an bzw. auf der Innenseite des Verschlussdeckels des Gehäuses vorgesehen ist.

Durch diesen für Einschub und Halterung vorgesehenen Gleitschuh ist die Stabilität des mit seinem Anschlusskopf in denselben eingeschobenen Dichtmittel-Behältnisses wesentlich erhöht, da derselbe eine mechanische Verstärkung des Verschlussdeckels mit sich bringt, wobei eine wesentliche Stabilisierungswirkung auch dadurch eintritt, dass das Dichtmittel-Behältnis nicht, wie bisher, mit seinem Anschlusskopf in die freie Deckwandung des Gehäuses "eingehängt" ist, sondern vielmehr in den mechanisch stabilen Gleitschuh des Verschlussdeckels etwa nut/federmäßig stabil eingeschoben ist, welcher während des Reifen-Reparatur-Vorganges am Boden aufliegt und sich dort zusätzlich abstützt.

Ein weiterer Vorteil besteht in der durch den nach vorne aufgeklappten Verschlussdeckel bedingten, wesentlich erleichterten Zugänglichkeit des Einschub-Schuhs für den Anschlusskopf des Dichtmittel-Behältnisses.

Über eine besonders bevorzugte, weil sozusagen selbst-stabilisierende Ausführungsform des neuen Einschub- und Halteschuhs gibt der **Anspruch 3** näher Auskunft.

Eine weitere vorteilhafte Ausführungsvariante des neuen Einschub- und Halteschuhs besteht in einer Konstruktion, wie sie in ähnlicher Art bei Fotoapparaten älterer Bauart für die Fixierung des Blitzlicht-Sockels üblich war, wobei zwei voneinander beabstandete Führungsschienen für den Einschub des Anschlusskopfes des Dichtmittel-Behältnisses vorgesehen sind und die Einschub-Begrenzung durch eine Art Zapfen od.dgl. am Ende des Einschubweges bewirkt wird, wie dem **Anspruch 4** zu entnehmen ist.

Um den Einschub des Anschlusskopfes des Dichtmittel-Behältnisses zu erleichtern ist es vorteilhaft, wenn die Führungs-Schienen des Einschub- und Halteschuhs zur Einschub-Öffnung hin etwas abgeschrägt, sich zu den vorderseitgen, freien Enden der Schienen hin verschmälernd ausgebildet sind, wozu im Einzelnen auf den **Anspruch 5** zu verweisen ist.

Bei einer Ausführungsart des Einschub- und Gleitschuhs gemäß **Anspruch 6** ist hohe mechanische Stabilität gesichert.

Eine tatsächlich lage-stabile Halterung des Dichtmittel-Behältnisses während einer Reifen-Reparatur lässt sich bei einer Ausführungsvariante der Erfindung gemäß **Anspruch 7** erreichen, bei welcher Einschnapp- bzw. Einrast-Elemente od.dgl. an den beiden Enden der Führungsschienen des Einschub- und Halteschuhs vorgesehen sind, welche für eine Art Hintergreifung des Anschlusskopfes des Dichtmittel-Behältnisses sorgen, sodass derselbe nicht aus dem Einschub- und Halteschuh zurück- bzw. herausrutschen kann.

Dem **Anspruch 8** ist eine besonders einfache Ausbildungsform der soeben beschriebenen Hintergreifungs-Elemente für den Anschlusskopf des Dichtmittel-Behältnisses zu entnehmen.

Es soll an dieser Stelle betont werden, dass für die stabile Fixierung des Dichtmittel-Behältnisses durchaus jede andere derartige, eine Zurück-Bewegung des Dichtmittel-Behältnisses verhindernde, dem Einschub des Anschlusskopfes zu Beginn und der Ausbringung desselben am Ende der Reifen-Reparatur sich jedoch relativ wenig widersetzende Hintergreifungs-Konstruktion in Frage kommt, wie z.B. federkraftunterstützte, in einen entsprechenden Federschacht od.dgl. drückbare und nach erfolgtem Einschub wieder auftauchende Stifte oder Kügelchen.

Was eine im Sinne einer möglichst freien und ungehinderten Zugänglichkeit für das Einschieben des Anschlusskopfes des Dichtmittel-Behältnisses besonders günstige Positionierung des auf der Innenseite des Gehäuse-Verschlussdeckels angeordneten Gleitschuhs betrifft, so geben darüber die **Ansprüche 9** und **10** näher Auskunft.

Dem **Anspruch 11** ist eine im Sinne eines die Verschmutzungsgefahr wesentlich reduzierenden Verschließens des Kompressor-Gehäuses günstige Ausführungsform des Verschlussdeckels zu entnehmen.

### Die Erfindung wird an Hand der Zeichnung näher erläutert:

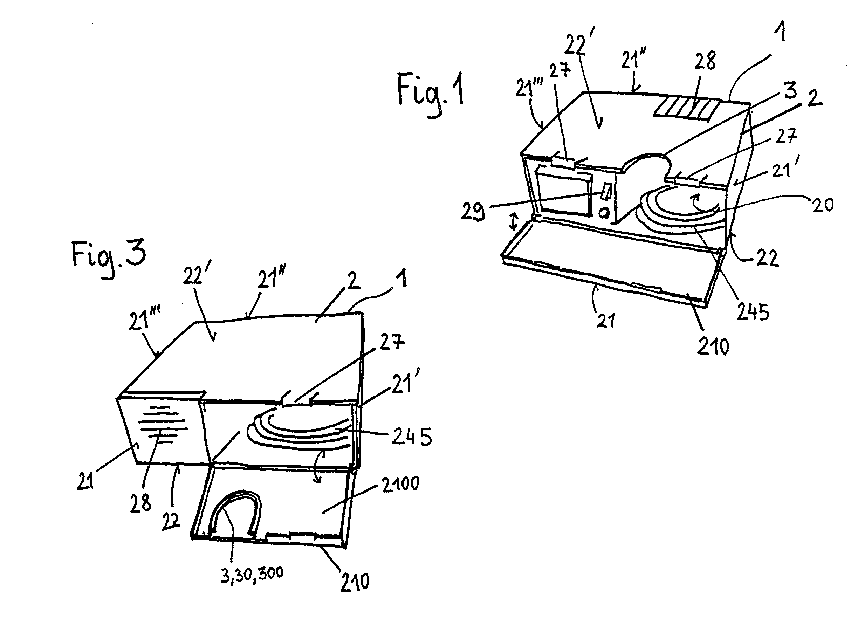

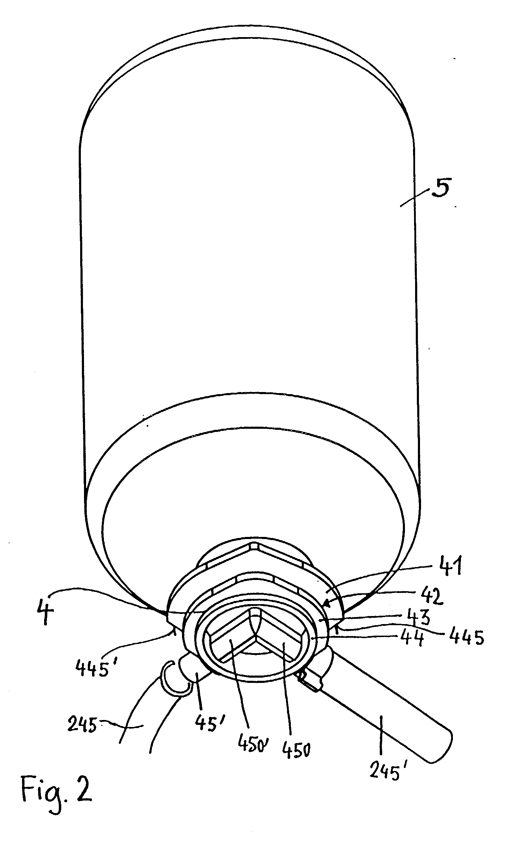

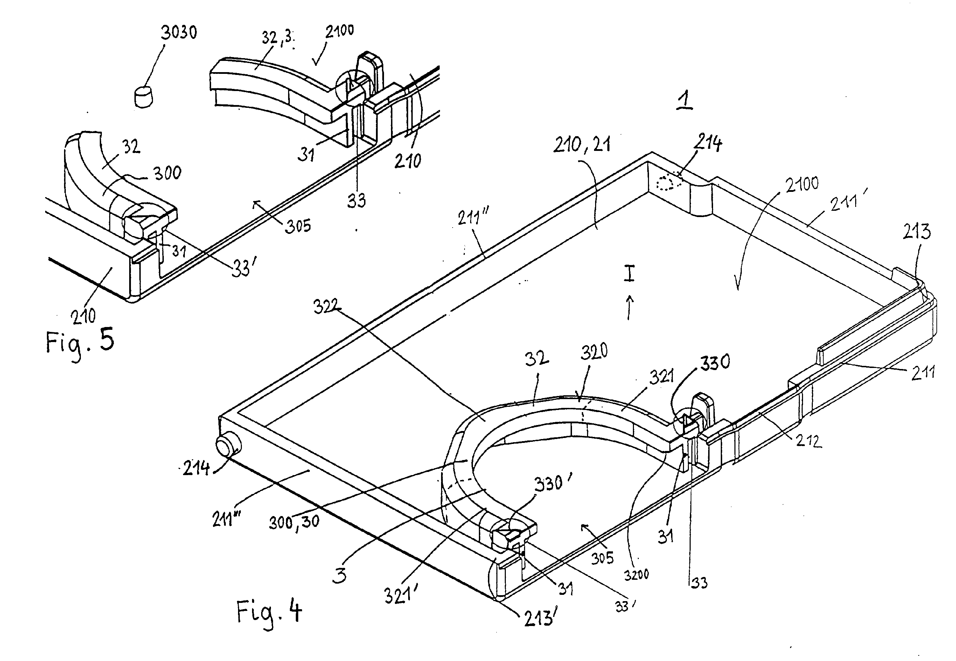

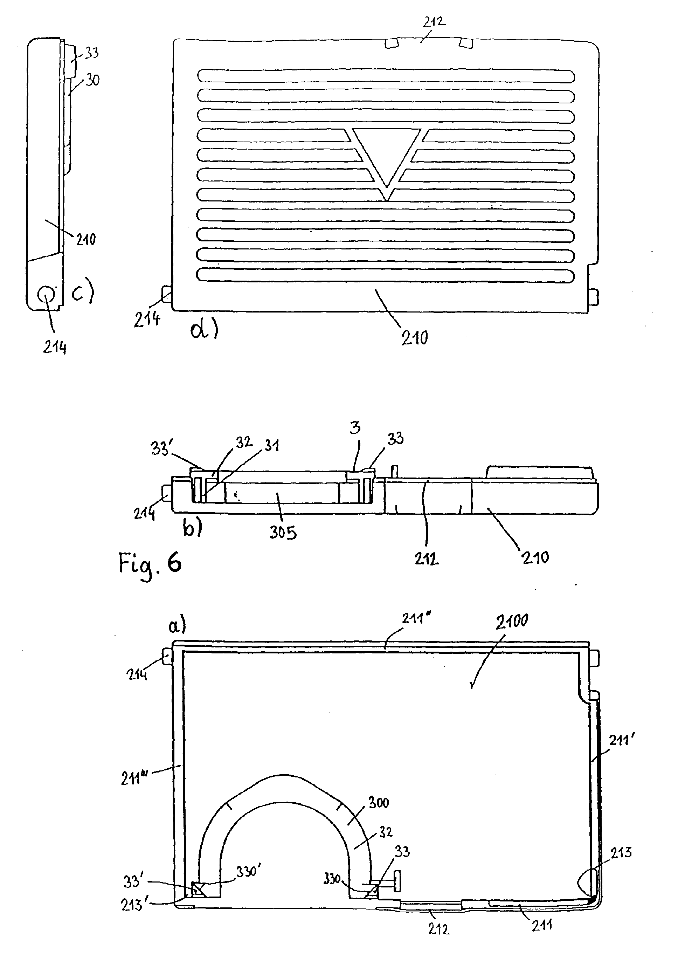

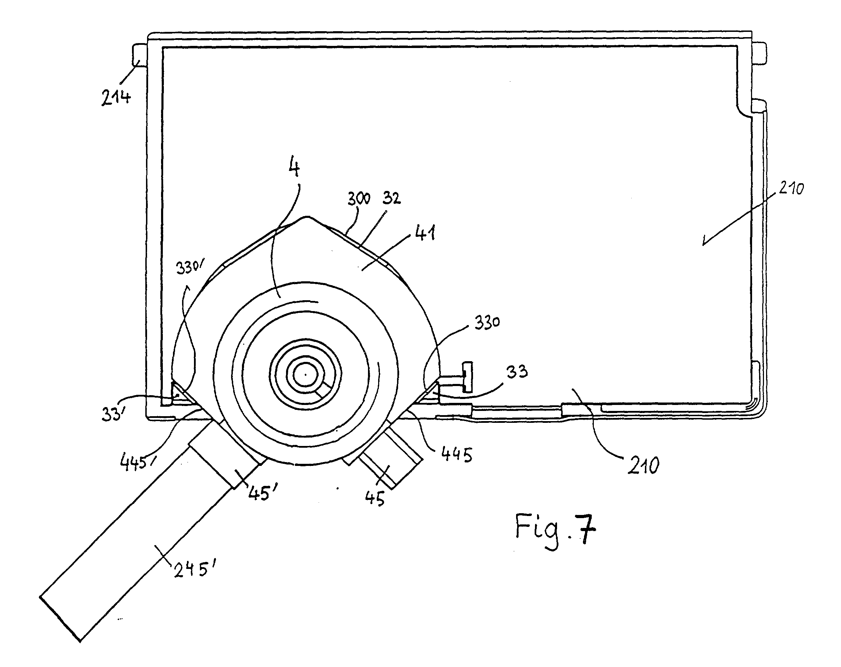

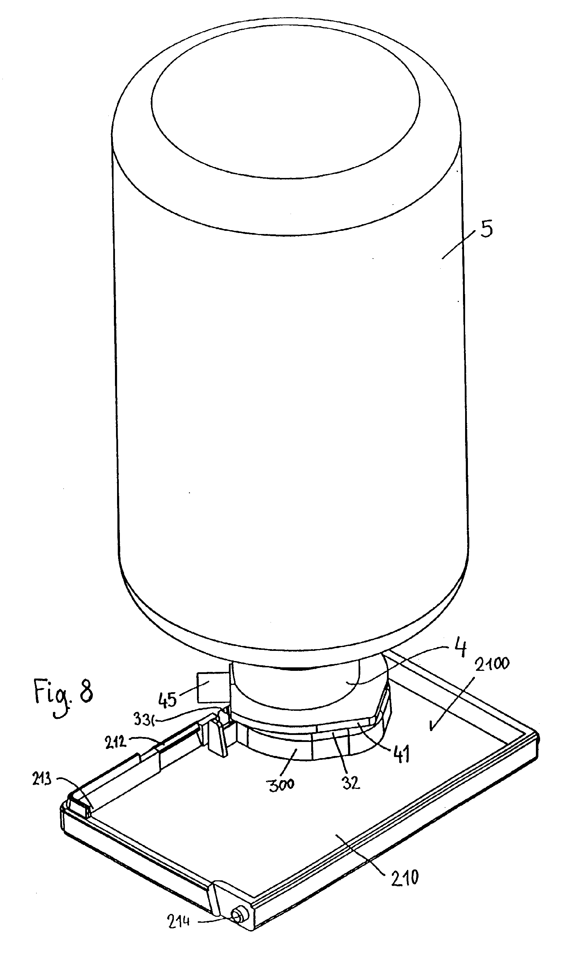

Es zeigen die Fig. 1 in Schrägansicht ein handelsübliches, also dem Stand der Technik entsprechendes Reifen-Reparatur-Gerät im geöffneten Zustand, die Fig. 2 ein in Verbindung mit diesem Reifen-Reparatur-Gerät einzusetzendes, ebenfalls handelsübliches Reifendicht- und -Füllmittel-Behältnis, die Fig. 3 in Schrägansicht ein Reifen-Reparatur-Gerät gemäß der Erfindung im ebenfalls geöffneten Zustand, die Fig. 4 eine Schrägansicht des Verschlussdeckels des Gehäuses des Gerätes mit den neuen Einschub- und Halteschuh, die Fig. 5 eine andere Ausführungsform des genannten Einschub- und Halteschuhs, die Fig. 6 verschiedene Ansichten des Verschlussdeckels in der Ausführungsform gemäß Fig. 4, die Fig. 7 eine Ansicht des in den Einschub- und Halteschuh des Verschlussdeckels eingeschobenen und in Lage gehaltenen Anschlusskopfes des Dichtmittel-Behältnisses und die Fig. 8 das Ensemble von in den Einschub- und Halteschuh des Verschlussdeckels eingeschobenem Dichtmittel-Behältnis und Kompressorgehäuse im Betriebszustand.

Das dem Stand der Technik entsprechende Reifen-Reparatur-Gerät 1 gemäß der Fig. 1 umfasst ein mit Luftansaug-Öffnungsschlitzen 28 in der Deckwandung 22' versehenes, die Form einer flachen quadratischen Schachtel aufweisendes Gehäuse 2 mit Bodenwandung 22, der schon erwähnten Deckwandung 22' und den vier Seitenwandungen 21, 21', 21", 21"'. Die vordere Seitenwandung 21 ist als nach vorne ausklappbarer Verschlussdeckel 210 ausgebildet, welcher nach Zuklappen mittels der Einschnappzungen 27 od.dgl. geschlossen gehalten werden kann.

Die Fig. 1 zeigt, wie ein im Inneren des Kompressorgehäuses 2 sich befindlicher Leerraum 20 bei nach vorne aufgeklapptem Verschlussdeckel 210 von vorne her zugänglich ist und wie dort der vom nicht gezeigten Kompressor im Gehäuse 2 ausgehende, für den Anschluss an das hier noch nicht gezeigte Dichtmittel-Behältnis vorgesehene Schlauch 245 für die Förderung der Druckluft in das genannte Behältnis untergebracht ist. In diesem Leerraum 20 kann auch das Stromzuführungskabel für den Elektro-Antrieb des Kompressors angeordnet werden.

Die oberseitige Deckwandung 22' des Gehäuses 2 weist eine von deren vorderem Rand ausgehende, etwa halbkreisartig bogenförmige Ausnehmung 3 für die Aufnahme des dort einschiebbaren Anschlusskopfes des Dichtmittel-Behältnisses auf. Zu sehen ist in der Fig. 1 weiters noch ein Schalter 29 mit Kontrolleuchte für den Kompressor.

Um die Funktion des in der Fig. 1 gezeigten, bekannten Reifen-Reparatur-Gerätes näher erläutern zu können, soll nun zur Fig. 2 übergegangen werden, welche eine als Dichtmittel-Behältnis handelsübliche Dichtmittel-Flasche 5 der Art, wie sie weiter oben näher beschrieben ist, in ihrer auf den Kopf gestellten, mit dem Hals nach abwärts gerichteten Betriebsstellung zeigt. Mit dem am Hals der Dichtmittel-Flasche 5 angeordneten Anschlusskopf 4 ist die Flasche 5, wenn sie nicht in Verwendung steht, verschlossen.

Der Anschlusskopf 4 weist in der in Fig. 2 gezeigten Stellung - von oben nach unten - nacheinander einen etwa die Form einer runden Scheibe mit einer abgerundeten Spitze besitzenden Auflagekragen 41 auf, welcher in eine zwischen ihm und einem danach folgenden Gleitführungs-Wulst 43 angeordnete Einschiebe-Gleitführungs-Nut 42 übergeht. Nach dem Wulst 43 folgt dann weiter abwärts eine Art Stabilisierungs- und Schutz-Ring 44, welcher von zwei, jeweils eine der beiden rückwärtigen zueinander im Winkel angeordneten, praktisch ebenen, Anschlussstutzen-Flanken 445, 445' mit den dortigen Schlauch-Anschlussstutzen 45, 45' überragenden Rohre 450, 450' durchsetzt ist, welche Anschlussstutzen für die Einbringung der Druckluft aus dem Kompressor in die Flasche 5 durch den in Fig. 1 erwähnten und in der Fig. 2 angedeuteten Druckluft-Führungsschlauch 245 und für die Ausbringung des für die Füllung des reparaturbedürftigen Reifens vorgesehenen Luft-Dichtmittel-Gemisches aus der Flasche 5 in den Reifen dienen.

Bei den handelsüblichen Geräten wird die Dichtmittel-Flasche mit ihrem Kopf 4 so in die Ausnehmung 3 der Deckwandung 22' des Kompressor-Gehäuses 2 eingeschoben, dass der oben genannte Auflagekragen 41 des Anschlusskopfes 4 auf der Oberseite der Deckwandung 22' flächig aufliegen kann und so für eine gewisse Lagestabilisierung der im Betriebszustand, wie gezeigt, senkrecht nach oben ragenden Dichtmittel-Flasche 5 sorgt.

Mit der oben genannten Führungsnut 42 des Anschlusskopfes 4 kommt es beim Einschieben desselben mit den Randzonen der halbrunden Ausnehmung 3 in der Deckwandung 22' des Gehäuses 2 zu einer Art Nut-Feder-Eingriff, wobei der Gleitführungs-Wulst 43 des Anschlusskopfes 4 für eine Gegenhalterung der Dichtmittel-Flasche 5 an der Innenseite der Deckwandung 22' des Gehäuses 2 sorgt.

Bei dem in der Fig. 3 - bei ansonsten gleichbleibenden Bezugszeichenbedeutungen - gezeigten erfindungsgemäß ausgebildeten, neuen Reifen-Reparatur-Gerät 1, dessen äußere Gestalt im Wesentlichen ähnlich schachtelartig ist, wie bei dem in der Fig. 1 gezeigten handelsüblichen Gerät, sind nun die Ansaug-Öffnungsschlitze 28 in der Vorderwandung 21 des Gehäuses 2 angeordnet und der nach vorne aufklappbare und grundsätzlich in ähnlicher Weise wie beim handelsüblichen Gerät verschließbare Verschlussdeckel 210 deckt hier nicht die volle Frontfläche. An seiner Innenseite 2100 trägt der Verschlussdeckel 210 eine Halterung 30 in Form eines etwa bogenförmigen Einschub- und Halteschuhs 300, welcher die Aufgabe der in der Fig. 1 gezeigten Aufnahme-Öffnung 3 für den in der Fig. 2 gezeigten Anschlusskopf 4 der Dichtmittel-Flasche 5 übernimmt.

Es ist klar, dass das neue Gehäuse 2 des Gerätes 1 im geschlossenen Zustand, wobei ganz deutlich zu erkennen ist, dass das Gerät 1 in diesem Zustand - mit Ausnahme der Ansaugschlitze 28 - tatsächlich rundum wandungsbegrenzt ist und eben keine für die Aufnahme des Anschlusskopfes 4 der Dichtmittel-Flasche 5 vorgesehene Ausnehmung 3 mehr aufweist, wie sie die Fig. 1 zeigt, weil eine solche infolge der Anordnung des neuen Einschub- und Halteschuhs 300 an der Innenseite 2100 des Verschlussdeckels 210 nicht mehr notwendig ist. Damit ist praktisch die Möglichkeit eines unerwünschten Eindringens von Staub und Schmutz durch eine größere Öffnung in das Innere des Gehäuses 2 nicht mehr gegeben.

Die Fig. 4 zeigt - bei ansonsten gleichbleibenden Bezugszeichenbedeutungen - den mit Gelenkszapfen 214 am hier nicht gezeigten Gehäuse schwenkbar gelagerten Verschlussdeckel 210 des neuen Reifen-Reparatur-Gerätes 1 mit dem von dessen Innenfläche 2100 weg aufragenden, als Aufnahme 3, 30 für den Anschlusskopf 4 des in der Fig. 3 erläuterten Dichtmittel-Behältnisses 5 vorgesehenen Einschub- und Halteschuh 300.

Derselbe ist etwa hufeisen- bzw. bogenförmig ausgebildet und weist zwei einander gegenüberliegende Führungsschienen-Abschnitte 321, 321' auf, die bei der hier gezeigten Ausführungsform durch einen Führungsschienenbogen-Abschnitt 322 miteinander - hier material-integral - verbunden sind. Der hier gezeigte, etwa bogenförmig verlaufende, Einschub- und Halteschuh 300 ragt mit einer schmäleren Sockelzone 31 von der Innenseite 2100 des Verschlussdeckels 210 nach oben auf, wobei sich an die genannte Sockelzone 31 eine - im Wesentlichen gleichen Verlauf aufweisende - überall zur Innenseite des Einschubschuh-Bogens 30 hin ragende Führungsschiene 32 anschließt.

Diese Führungsschiene 32 ermöglicht infolge des Rückspringens der Sockelzone 31 ein praktisch ungehindertes Einschieben des Anschlusskopfes 4 des Dichtmittel-Behältnisses 5 in den Einschub- und Halteschuh 300, indem die Gleitführungs-Nut 42 zwischen Auflagekragen 41 und Gleitführungs-Wulst 43 des Anschlusskopfes 4 des in Fig. 3 gezeigten Dichtmittel-Behältnisses 5 auf die Führungsschiene 32 des Einschub- und Halteschuhs 300 aufgeschoben wird.

An den zur Einschub-Öffnung 305 nahen beiden, "freien" Enden der Führungsschiene 32 sind von deren Oberseite 320 aufragende Hintergreifungselemente in Form von z.B. aus einem druck-nachgiebigen Material bestehenden Haltenasen 33, 33' angeordnet, welche beim Einschieben des Anschlusskopfes 4 des Dichtmittel-Behältnisses 5 "ausweichen" können. Wenn derselbe dann vollständig und satt in den Einschub- und Halteschuh 300 eingeschoben ist, hintergreifen die beiden Nasen 33, 33' mit "schrägen" Hintergreifungsflächen 330, 330' den Anschlusskopf 4 an dessen Anschlussstutzen-Flanken 45, 45', sodass dieser an einem Herausrutschen aus dem Einschub- und Halteschuh 300, etwa verursacht durch Vibrationen beim Betrieb des Kompressors, gehindert ist.

An dieser Stelle soll bezüglich der soeben näher beschriebenen Hintergreifungs-Nasen 33, 33' gleich auf die nachfolgende, dieselben und deren Funktion im Einzelnen erläuternde Fig. 5 hingewiesen werden, wobei zur Fig. 4 noch nachzutragen ist, dass an den beiden Enden der Führungsschiene 32 des Einschub- und Haltekopfes 4 des Dichtmittel-Behältnisses 5 leichte, die Führungsschienen in ihrer Dicke schmälernde Abschrägungen 3200 vorgesehen sind, welche das Einschieben des Anschlusskopfes 4 in den Schuh 30 wesentlich erleichtern.

In der Fig. 5 ist - bei ansonsten gleichbleibenden Bezugszeichenbedeutungen - eine andere Ausführungsform des Einschub- und Halteschuhs 300 gezeigt, wobei dort der aus Fig. 4 ersichtliche, bogenförmige Abschnitt 322 fehlt und nur die beiden voneinander beabstandeten, vorher schon erläuterten, Einschubschuh-Abschnitte 321, 321' - jetzt voneinander isoliert - verblieben sind und anstelle des soeben genannten bogenförmigen Abschnittes ein Einschubbegrenzungs-Zapfen 3030 angeordnet ist.

Aus der vorher behandelten Fig. 4 ist weiters noch ersichtlich, dass der Verschlussdeckel 210 einen allseitig emporragenden Rand mit vier Randabschnitten 211 - 211"' aufweist, wobei der vordere Randabschnitt 211 nur an der Stelle der Einschub-Öffnung 305 für den Anschlusskopf 4 des Dichtmittel-Behältnisses 5 unterbrochen ist. Im unmittelbar daneben liegenden Bereich ist ein mit der oben zu der Fig. 1 erläuterten Schnapp-Schließzunge 27 des Gehäuses 2 einschnapp-schließ-kooperierendes Gegenschnapp-Schließelement 212 angeordnet.

An jener Stelle, wo es infolge der Einschub-Öffnung 305 zum Einschub- und Halteschuh 300 hin zur Unterbrechung des aus der Fig. 4 ersichtlichen vorderseitigen Randabschnittes 211 des Verschlussdeckels 210 kommt, ist eine mit der Deckwandung 22' des in der Fig. 3 gezeigten Gehäuses 2 integrale und in ihrer Form dieser Einschub-Öffnung entsprechende Abdeckzunge vorgesehen, womit die volle Schließung des Gehäuses 2 bei geschlossenem Verschlussdeckel 210 gewährleistet ist.

Die Fig. 6a bis 6d zeigen - bei ansonsten gleichbleibenden Bezugszeichenbedeutungen - vier verschiedene Ansichten des an seiner Innenseite 2100 den Einschub- und Halteschuh 300 tragenden Verschlussdeckels 210 näher, wobei es auf Grund der bisherigen Ausführungen keiner sonstigen näheren Erläuterungen bedarf. Hingewiesen sei hierzu nur darauf, dass bei dem Verschlussdeckel 210 der Einschub- und Halteschuh 300, wie auch aus den Fig. 4 und 5 ersichtlich, bevorzugterweise im Nahbereich einer der beiden "oberen" bzw. "vorderen" Ecken 213, 213', im vorliegenden Fall also im Nahbereich der linken Ecke 213' desselben angeordnet ist, wodurch die Stabilität des Einschubschuh-Bereiches des Verschlussdeckels 210 und damit der dort im Zuge eines Reifen-Reparatur-Vorganges aufgesteckten, senkrecht empor ragenden, und so relativ hohe Hebelkräfte auf den Deckel 210 ausübenden Dichtmittel-Flasche 5 in günstiger Weise wesentlich erhöht ist. Schließlich sind aus der Fig. 6 auch die zur Anlenkung des Verschlussdeckels 210 an das Gehäuse 2 dienenden Gelenkszapfen 214 ersichtlich.

in der Fig. 7 ist - bei ansonsten gleichbleibenden Bezugszeichenbedeutungen - die oben schon kurz erwähnte Hintergreifung des in den neuen Einschub- und Halteschuh 300 eingeschobenen Anschlusskopfes 4 mittels der an den beiden Enden der Führungsschiene 32 des Einschub- und Halteschuhs 300 angeordneten Hintergreifungs-Nasen 33, 33' deutlich gezeigt. Es ist zu sehen, wie diese Nasen 33, 33' mit ihren Schrägflächen 330, 330' an die Anschlussstutzen-Flanken 445, 445' des Anschlusskopfes anliegen, aus welchen jeweils der Anschlussstutzen 45, 45' für den Druckluftschlauch 245 und für den Dichtmittelschlauch 245' hervorragen.

Schließlich zeigt die Fig. 8 - bei ansonsten gleichbleibenden Bezugszeichenbedeutungen - den wesentlichen Teil des gesamten Ensembles von - nicht gezeigtem - Kompressor-Gehäuse mit aufgeklapptem Verschlussdeckel 210 und der mit ihrem Anschlusskopf 4 in den Gleitführungsschuh 30 eingeschobenen, "verkehrt" nach oben ragenden Dichtmittel-Flasche 5, wie es sich im Betriebszustand während eines Reifen-Reparatur-Vorganges dem Betrachter präsentiert.

## Patentansprüche

1. Gerät für die provisorische Reparatur eines schadhaften, undicht bzw. leck gewordenen Reifens eines Kraftfahrzeuges
- mit in einem Gehäuse (2) angeordnetem, mittels eines von der Fahrzeug-Batterie mit Strom versorgbaren bzw. an den Zigarettenanzünder des Fahrzeuges anschließbaren, Motors antreibbarem Kompressor für die Erzeugung von Druckluft
- weiters mit einem zusammen mit dem Stromversorgungskabel für den Motor in einem mit einem aufklappbaren Verschlussdeckel (210) verschließbaren Leerraum (20) des Gehäuses (2) unterbringbaren, an den Anschlusskopf (4) eines mit einem Reifen-Dichtmittel gefüllten Behältnisses (5), insbesondere einer derartigen Flasche, anschließbaren Druckluft-Versorgungsschlauch (245) für die Förderung eines Druckluft-Reparaturmittel-Gemisches aus dem Dichtmittel-Behältnis (5) durch einen zweiten, ebenfalls an den genannten Anschlusskopf (4) anschließbaren Schlauch (245') und durch das Ventil des Reifens in dessen Inneres
- und mit einer Aufnahme (3) für den Anschlusskopf (4) des Dichtmittel-Behältnisses (5) an der Innenseite (1) eines im Nahbereich der Bodenwandung (22) des Gehäuses (2) angelenkten, im geschlossenen Zustand im Wesentlichen eine (21) bzw. einen Teilbereich einer (21) der Seitenwandungen (21 - 21"') des Gehäuses (2) bildenden, aufklappbaren und im geöffneten Zustand vom Gehäuse (2) aus nach abwärts aufgeklappten Verschlussdeckels (210),
- wobei die Aufnahme (3) bei geschlossenem Gehäuse (2) - von außen nicht sichtbar - sich in dessen Innerem (I) befindet,
**dadurch gekennzeichnet,**
**dass** die Aufnahme (3) für den Anschlusskopf (4) als Halterung (30) für ein im Wesentlichen nut/feder-gleitgeführtes Einschieben des Anschlusskopfes (4) des Dichtmittel-Behältnisses (5) ausgebildet ist.

2. Gerät nach Anspruch 1, **dadurch gekennzeichnet, dass** die Halterung (30) für ein gleit-geführtes Einschieben des Anschlusskopfes (4) des Dichtmittel-Behältnisses (5) durch einen - im Wesentlichen einem Aufsteckschuh für Blitzlichtgeräte auf Fotoapparaten analog ausgebildeten, der Kontur und Querschnittsform der zwischen dem etwa scheibenförmigen Auflage- bzw. Anschlag-Kragen (41) und dem Gleitführungs-Wulst (43) des Anschlusskopfes (4) des Dichtmittel-Behältnisses (5) verlaufenden Gleitführungs-Nut (42) entsprechend ausgebildeten - Einschub- und Halteschuh (300) gebildet ist.

3. Gerät nach Anspruch 1 oder 2, **dadurch gekennzeichnet, dass** der Einschub- und Halteschuh (300) eine im Wesentlichen der Kontur bzw. Form des Verlaufes des Gleitführungs-Wulstes (43) und der Gleitführungs-Nut (42) von einem der beiden Schlauch-Anschlussstutzen (45, 45') des Anschlusskopfes (4) des Dichtmittel-Behältnisses (5) bis zum jeweils anderen Schlauch-Anschlussstutzen (45', 45) hin entsprechende, sich in Richtung weg von der Anlenkung (214) des Verschlussdeckels (210) öffnende, ansonsten durchgehende Hufeisen- bzw. Bogenform aufweist, wobei von einer von der Innenfläche (2100) des Verschlussdeckels (210) aus aufragenden, vorzugsweise im Wesentlichen etwa hufeisen- bzw. bogenförmig verlaufenden, Sockelzone (31) aus eine mit der Gleitführungs-Nut (42) des Anschlusskopfes (4) einschiebe-gleitkooperierbare und den Einschub begrenzende, eine ebenfalls durchgehende, etwa hufeisen- bzw. bogenförmig verlaufende Gleitführungs-Schiene (32) im Wesentlichen parallel zur Verschlussdeckel-Innenfläche (2100) zum Bogen-Inneren des Einschub- und Halteschuhs (300) wegragt.

4. Gerät nach einem der Ansprüche 1 bis 3, **dadurch gekennzeichnet, dass** der Einschub- und Halteschuh (300) mit im Wesentlichen dem genannten Schuh (300) gemäß dem Anspruch 3 entsprechenden Flanken (321, 321') mit Sockelzone (31) und Gleitführungs-Schiene (32), jedoch ohne Scheitelbogen (322) ausgebildet ist und dass an dessen Stelle ein Einschub-Begrenzungszapfen (3030) od.dgl. angeordnet ist.

5. Gerät nach einem der Ansprüche 1 bis 4, **dadurch gekennzeichnet, dass** die Gleitführungs-Schiene (32) des Einschub- und Halteschuhs (300) an ihren beiden freien Enden jeweils durch eine unterseitige Abschrägung (3200) sich zu diesen freien Enden hin verschmälernd und damit das Einschieben des Anschlusskopfes (4) des Dichtmittel-Behältnisses (5) erleichternd ausgebildet ist.

6. Gerät nach einem der Ansprüche 1 bis 5, **dadurch gekennzeichnet, dass** der Einschub- und Halteschuh (300), vorzugsweise spritzguss-gefertigt, mit dem Verschlussdeckel (210) des Gehäuses (2) material-integral verbunden ist.

7. Gerät nach einem der Ansprüche 1 bis 6, **dadurch gekennzeichnet, dass** der Einschub- und Halteschuh (300) beiderseits von seiner Einschub-Öffnung (305), vorzugsweise von der Oberseite (320) der Gleitführungs-Schiene (32), im Bereich von deren freien Enden aufragende, für eine - die stabile fixierende Halterung des Anschlusskopfes (4) im Einschub- und Halteschuh (300) und damit des Dichtmittel-Behältnisses (5) gewährleistende - Hintergreifung von dessen Anschlussstutzen-Flanken (445, 445') vorgesehene, bei Druckausübung beim Einschub des Anschlusskopfes (4) des Dichtmittel-Behältnisses (5) ausweichend sich verformende Hintergreifungs-Nasen (33, 33'), -Vorsprünge od.dgl. aufweist.

8. Gerät nach einem der Ansprüche 1 bis 7, **dadurch gekennzeichnet, dass** die Hintergreifungs-Nasen (33, 33') des Einschub- und Halteschuhs (300) mit - der Ausrichtung der Anschlussstutzen-Flanken (445, 445') des Anschlusskopfes (4) des Dichtmittel-Behältnisses (5) entsprechenden - schrägen Nasen-Flanken (330, 330') ausgebildet sind.

9. Gerät nach einem der Ansprüche 1 bis 8, **dadurch gekennzeichnet, dass** der Einschub- und Halteschuh (300) im Wesentlichen im Nahbereich einer der beiden anlenkungsfernen Ecken (213, 213') des Verschlussdeckels (210) des Gehäuses (2) angeordnet ist.

10. Gerät nach einem der Ansprüche 1 bis 9, **dadurch gekennzeichnet, dass** die Einschub-Öffnung (305) des Einschub- und Halteschuhs (300) auf der anlenkungsfernen Seite des aufklappbaren Verschlussdeckels (210) angeordnet ist.

11. Gerät nach einem der Ansprüche 1 bis 10, **dadurch gekennzeichnet, dass** der Verschlussdeckel (210) mit im Wesentlichen rundum laufenden, an der Stelle der Einschub-Öffnung (305) des Einschub- und Halteschuhs (300) unterbrochenen, von der Verschlussdeckel-Innenfläche (2100) aufragenden Deckel-Randflanken (211 - 211"') ausgebildet ist.
